(19) Europäisches Patentamt
European Patent Office
Office européen des brevets

(11) EP 0 531 861 B1

(12) EUROPÄISCHE PATENTSCHRIFT

(45) Veröffentlichungstag und Bekanntmachung des Hinweises auf die Patenterteilung:
**31.01.1996 Patentblatt 1996/05**

(51) Int Cl.[6]: **C08L 69/00**, C08K 5/42

(21) Anmeldenummer: **92114907.6**

(22) Anmeldetag: **01.09.1992**

(54) **Flammwidrige Polycarbonatformmassen**

Flame retardant polycarbonate moulding compositions

Masses à mouler de polycarbonate résistant à la flamme

(84) Benannte Vertragsstaaten:
**BE DE FR GB IT NL**

(30) Priorität: **12.09.1991 DE 4130331**

(43) Veröffentlichungstag der Anmeldung:
**17.03.1993 Patentblatt 1993/11**

(73) Patentinhaber: **BAYER AG**
**D-51368 Leverkusen (DE)**

(72) Erfinder:
- **Weider, Richard, Dr.**
  **W-5090 Leverkusen (DE)**
- **Scholl, Thomas, Dr.**
  **W-5060 Bergisch Gladbach 2 (DE)**
- **Kircher, Klaus, Dr.**
  **W-5090 Leverkusen (DE)**
- **Horn, Klaus, Dr.**
  **W-4150 Krefeld (DE)**

(56) Entgegenhaltungen:
**FR-A- 2 367 797** **US-A- 4 533 690**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung sind flammwidrige Polycarbonatformmassen mit einem Gehalt an halogenfreien Sulfonsäuresalzen aromatischer Aldehyde oder an Acetalen dieser Aldehyde in Mengen von 0,005 Gew.-% bis 10 Gew.-%, vorzugsweise von 0,01 Gew.-% bis 5 Gew.-%, bezogen auf das Gesamtgewicht aus Polycarbonat und halogenfreiem Sulfonsäuresalz, gegebenenfalls in Kombination mit anorganischen Sulfaten.

Die Wirkung von aromatischen Sulfonsäuresalzen als Flammschutzzusatz für Polycarbonat ist bekannt und z.B. in US 3 933 734 oder US 3 940 366 beschrieben. Auch Sulfonsäuresalze von aromatischen Carbonsäuren, Carbon säureestern und Ketonen sind bereits beschrieben (US 3 953 399; US 3 926 908; US 4 104 246). Die Beispiele in den genannten Patentschriften belegen, daß die dort genannten halogenfreien Sulfonate wesentlich schlechter zu bewerten sind als die dem bevorzugten Bereich zugehörigen halogenhaltigen Salze. Insbesondere wurden alle mit monomeren, halogenfreien Zusätzen geprüften Mischungen selbst bei einer Dosierung von 1 Gew.-% und bei Prüfkörperdicken zwischen 3,2 und 1,6 mm als "brennend abtropfend" klassifiziert.

Es wurde nun überraschenderweise gefunden, daß aromatische Polycarbonatkompositionen mit halogenfreien Sulfonsäuresalzen von aromatischen Aldehyden und deren Acetalderivaten gegebenenfalls in Kombination mit anorganischen Sulfaten deutlich schneller verlöschen und weniger zum Abtropfen neigen, als die in obigen Patentschriften beschriebenen halogenfreien Verbindungen. Sie erreichen in ihrer Wirkung halogenhaltige Sulfonate wie zum Beispiel das Perfluorbutansulfonat. Insbesondere läßt sich mit ihnen in sehr geringer Dosierung ohne Zusatz von weiteren Additiven die UL-94 Brennbarkeitsklasse VO in 3,2 mm dicken Prüfkörpern erreichen. Dies ist um so überraschender, als sie selbst chemich sehr ähnliche Verbindungen wie die oben erwähnten Carbonsäuren oder Ketone in ihrer Wirkung übertreffen. Die höhere Flammwidrigkeit zeigt sich z.B. bei 1,6 mm dicken Prüfkörpern, bei denen die erfindungsgemäßen Zusätze zu wesentlich niedrigeren Weiterbrennzeiten führen. Die erfindungsgemäßen Sulfonate zeigen auch weitere Vorteile wie gute Zugänglichkeit, geringen Preis und verbesserte Farbe der Polycarbonatkompositionen.

Geeignete halogenfreie Sulfonsäuresalze sind vorzugsweise solche der Formel (I)

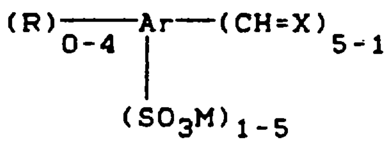

(I)

worin

- Ar ein aromatischer Rest mit ein bis 4 aromatischen Ringen ist,
- M für ein Metall der Gruppen 1a, 1b, 2a oder 2b des Periodischen Systems der Elemente steht,
- R Wasserstoff, ein halogenfreies $C_1$-$C_6$-Alkyl, ein halogenfreies $C_6$-$C_{10}$-Aryl, ein halogenfreies $C_1$-$C_6$-Alkoxy, eine halogenfreie Acylamino- oder eine halogenfreie Acylimino-Gruppe ist und
- X für Sauerstoff oder eine halogenfreie polyvalente Gruppe der Struktur $R'(-O-)_{2-6}$ oder für zwei halogenfreie monovalente R'-O-Reste steht,

wobei R' ein gegebenenfalls verzweigter, halogenfreier 1-6-wertiger Rest eines aliphatischen $C_2$-$C_{20}$- aromatischen $C_6$-$C_{10}$ oder araliphatischen $C_7$-$C_{20}$- Kohlenwasserstoffes ist, der gegebenenfalls mehrere Struktureinheiten (I) verbindet.

Es können erfindungsgemäß alle aromatischen Polycarbonate verwendet werden. Bevorzugt werden jedoch Polycarbonate verwendet, die durch Umsetzung von Diphenolen, insbesondere von Dihydroxydiarylalkanen, mit Phosgen oder Diestern der Kohlensäure erhältlich sind, wobei außer den unsubstituierten Dihydroxydiarylalkanen auch solche geeignet sind, deren Arylreste in o- und/oder m-Stellung zur Hydroxylgruppe Methylgruppen tragen.

Ebenso sind verzweigte Polycarbonate geeignet. Als Kettenabbrecher dienen beispielsweise Monophenole, als Verzweiger beispielsweise Tris- oder Tetraphenole.

Die Polycarbonate sind vorzugsweise aus halogenfreien phenolischen Komponenten aufgebaut.

Die erfindungsgemäß flammwidrig auszurüstenden thermoplastischen Polycarbonate sind literaturbekannt oder nach literaturbekannten Verfahren herstellbar.

Erfindungsgemäß zu verwendende Polycarbonate sind ther moplastische, aromatische Homopolycarbonate und Copolycarbonate, denen z.B. ein oder mehrere der folgenden Diphenole zugrunde liegen:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
α,α'-Bis-(hydroxyphenyl)-diisopropylbenzole

sowie deren kernalkylierte und kernhalogenierte Verbindungen. Diese und weitere geeignete Diphenole sind zB. in den US-Patentschriften 3 028 365, 3 275 601, 3 148 172, 3 062 781, 2 991 273, 3 271 367, 2 999 835, 4 982 014 und 2 999 846, in den deutschen Offenlegungsschriften 1 570 703, 2 063 050, 2 063 052, 2 211 956, 2 211 957, der franz. Patentschrift 1 561 518 und in der Monographie "H. Schnell, Chemistry and Physics of Polycarbonates, Interscience Publishers, New York, 1964" beschrieben

Bevorzugte Diphenole sind z.B.:

4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
Bis-(3,5-dimethyl-4-hydroxyphenyl)-methan
2,2-Bis-(3,5-dimethyl-4-hydroxyphenyl)-methan
Bis-(3,5-Dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α'-Bis-(3,5-dimethyl-4-hydroxyphenyl)-p-diisopropylbenzol und
1,1-Bis-(4-hydroxyphenyl)-3,3,5-trimethylcyclohexan.

Besonders bevorzugte Diphenole sind z.B.:

2,2-Bis-(4-hydroxyphenyl)-propan
2,2-Bis-(3,5-dimethyl-4-hydroxyphenyl)-propan
1,1-Bis-(4-hydroxyphenyl)-cyclohexan )-cyclohexan und
1,1-Bis-(4-hydroxyphenyl)-3,3,5-trimethyl-cyclohexan.

Bevorzugte aromatische Polycarbonate sind solche, denen ein oder mehrere der als bevorzugt genannten Diphenole zugrunde liegen. Besonders bevorzugt werden Copolycarbonate, denen 2,2-Bis-(4-hydroxyphenyl)-propan und eines der anderen als besonders bevorzugt genannten Diphenole zugrunde liegen. Besonders bevorzugt sind weiterhin Homopolycarbonate aus 2,2-Bis-(4-hydroxyphenyl)-propan oder aus 1,1-Bis-(4-hydroxyphenyl)-3,3,5-trimethylcyclohexan.

Die aromatischen Polycarbonate können nach bekannten Verfahren hergestellt werden, so z.B. nach dem Schmelzumesterungsverfahren aus Bisphenol und Diphenylcarbonat und dem Zweiphasengrenzflächenverfahren aus Bisphenolen und Phosgen, wie es in der obengenannten Literatur beschrieben ist.

Die aromatischen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, beispielsweise solchen mit drei oder mehr als drei phenolischen Hydroxygruppen verzweigt sein.

Polycarbonate dieser Art sind z.B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 2 500 092 beschrieben.

Einige der verwendbaren Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2'-hydroxy-5'-methylbenzyl)-4-methylphenol, 2-(4-Hydroxyphenyl)-2-(2,4-dihydroxyphenyl)-propan, Hexa-(4-(4-hydroxyphenylisopropyl)phenyl)-ortho-terephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Die aromatischen Polycarbonate sollen in der Regel mittlere Gewichtsmittel-Molekulargewichte $\overline{M}_w$ von 10 000 bis über 100 000, vorzugsweise von 20 000 bis 40 000 haben, ermittelt durch Messungen der rel. Viskosität in $CH_2Cl_2$ bei 25°C und einer Konzentration von 0,5 g in 100 ml $CH_2Cl_2$.

Zur Einstellung des Molekulargewichts $\overline{M}_w$ der Polycarbonate werden in bekannter Weise Kettenabbrecher, wie beispielsweise Phenol oder Halogenphenole oder Alkylphenole in den berechneten Mengen eingesetzt.

Die erfindungsgemäßen Polycarbonatformmassen werden nach üblichen Verfahren z.B. durch Mischen der Zusätze mit dem Polycarbonatgranulat und anschließende Verarbeitung oder durch Zudosierung eines Konzentrats der entsprechenden Zusätze in Polycarbonat in das zu verarbeitende Granulat hergestellt.

Gegenstand der vorliegenden Erfindung ist somit außerdem ein Verfahren zur Herstellung der erfindungsgemäßen Polycarbonatformmassen, das dadurch gekennzeichnet ist, daß man die halogenfreien Sulfonsäuresalze der aromatischen Aldehyde oder der Acetale dieser Aldehyde gegebenenfalls in Kombination mit anorganischen Sulfaten entweder als solche oder in Form eines Polycarbonatkonzentrats mit dem flammwidrig auszurüstenden Polycarbonatharz in üblicher Weise vermischt und anschließend verarbeitet.

Neben den erfindungsgemäß einzusetzenden Sulfonsäuresalzen können noch weitere, an sich bekannte Zusatzstoffe wie Glasfasern, Füllstoffe, Pigmente, UV-Stabilisatoren, Antioxidantien, Hydrolyseschutzmittel, Entformungshilfen sowie bekannte polymere, das brennende Abtropfen verhindernde anti-dripping-Mittel wie z.B. Teflon in die erfindungsgemäßen Polycarbonatformmassen eingearbeitet werden.

Die erfindungsgemäßen Sulfonsäuresalze leiten sich von aromatischen, Aldehydgruppen tragenden Sulfonsäuren ab, die leicht nach bekannten Verfahren z.B. aus den zugrunde liegenden Aldehyden durch Sulfonierung, aus aromatischen Halogenaldehyden durch Austausch des Halogens gegen die Sulfonatgruppe oder aus den Sulfonaten durch Formylierung hergestellt werden. Die flammschützende Wirkung wird sowohl von den Aldehyden selbst als auch von ihren, durch säurekatalysierte Umsetzung mit Alkoholen oder Phenolen unter Wasserabspaltung erhältlichen Acetalderivaten ausgeübt. Bei Verwendung von Monoalkoholen entstehen die acyclischen Acetale mit zwei Resten R' pro Aldehydgruppe, aus Diolen oder ortho-Diphenolen entstehen die einfachen cyclischen Acetale, bei Verwendung von Tri- oder Tetraalkoholen oder -phenolen werden jeweils zwei Aldehydgruppen über dem Alkohol- oder Phenolrest miteinander verknüpft. Sind im zur Acetalisierung verwendeten Alkohol oder Phenol mehr als zwei Hydroxygruppen, können die entsprechenden Acetale auch oligomerer oder polymerer Art sein.

Als erfindungsgemäße Aldehydgruppen-haltige Sulfonate können zum Beispiel folgende Verbindungen in Form ihrer Metallsalze eingesetzt werden:

2-Formyl-benzolsulfonsäure, 3-Formyl-benzolsulfonsäure, 4-Formyl-benzolsulfonsäure, 5-Formyl-2-methyl-benzolsulfonsäure, 5-Formyl-2-methoxy-benzolsulfonsäure, 5-Formyl-2-hexadecyloxy-benzolsulfonsäure, 2-Formyl-benzol-1,5-disulfonsäure, 2,4-Diformyl-benzolsulfonsäure, 2-Formyl-5-phenyl-benzolsulfonsäure, Biphenyl-4'-formyl-4-sulfonsäure, Biphenyl-4,4'-bis-formyl-2,2'-disulfonsäure, 2-Formyl-5-(acetylarmino)-benzolsulfonsäure oder 2-Formyl-5-(phthalimino)-benzolsulfonsäure, oder deren Acetale, die zum Beispiel durch Umsetzung oben genannter Aldehyde mit folgenden Hydroxyverbindungen erhältlich sind:

Methanol, Ethanol, n-Propanol, n-Butanol, Isobutylalkohol, Isopentylalkohol, 2-Ethylhexanol, Benzylalkohol, 2-Phenylethanol, 3-Phenyl-1-propanol, Ethylenglycol, Propylenglycol, 1,3-Propandiol, 1,2-Butylenglycol, 1,3-Butandiol, 2,3-Butandiol, Neopentylglycol, 2,5-Hexandiol, 2-Methyl-2-propyl-1,3-propandiol, 2,2-Diethyl-1,3-propandiol, Glycerin, 2-Hydroxymethyl-2-methyl-1,3-propandiol, 1,1,1-Trimethylol-propan, Pentaerythrit, Sorbit, Mannit, 1,2-Cyclohexandiol, 1,4-Cyclohexandimethanol, Bis-hydroxymethyl-hexahydro-4,7-methano-indan, Brenzkatechin, 1,4-Bis-(2-hydroxyethoxy)-benzol, )-benzol, 4-tert.-Butyl-brenzkatechin, 2,3-Naphthalindiol, 1,8-Naphthalindiol, 2,2'-Dihydroxybiphenyl, 3,4-Dihydroxybiphenyl, 2,2-Bis-(4-hydroxyphenyl)-propan, 2,2-Bis-(4-(2-hydroxyethoxy)-phenyl)-propan oder 2,2-Bis-(4-(2,3-dihydroxypropoxy)-phenyl)-propan, Glycerin-1-phenylether, Glycerin-1-(nonylphenyl)-ether, Glycerin-1-(p-cumyl-phenyl)-ether, 2,2-Bis-(4-(2,3-dihydroxypropoxy)phenyl)-propan )phenyl)-propan und 1-Stearin.

Das Metallkation der Sulfonate kann aus der Gruppe Ia, b oder IIa, b des Periodensystems stammen. Insbesondere kommen Lithium, Natrium, Kalium, Magnesium, Calcium und Zink in Betracht. Bevorzugt sind die Metalle aus der Alkali- und Erdalkaligruppe.

Der Anteil der erfindungsgemäßen Sulfonsäuresalze in der Polycarbonatkomposition kann in weiten Grenzen variiert werden. Oberhalb von 10 Gew.-% treten jedoch unerwünschte Veränderungen der physikalischen Eigenschaften des Polycarbonats auf, während bei Zusatzmengen unter 0,005 Gew.-% die flammschützende Wirkung verloren geht. Da die flammschützende Wirkung bereits mit sehr geringen Zusatzmengen erreicht wird, werden die erfindungsgemäßen Sulfonsäuresalze bevorzugt in Mengen zwischen 5 und 0,01 Gew.-% zugesetzt.

Die erfindungsgemäßen Sulfonsäuresalze können sowohl in reiner Form als auch in technischer Qualität eingesetzt

werden, die durch einen zwischen 0 und 50 Gew.-% betragenden Anteil an anorganischen Sulfaten wie z.B. Natriumoder Kaliumsulfat gekennzeichnet ist. In bestimmten Fallen können solche Kombinationen synergistische Effekte zeigen.

Alle erfindungsgemäßen Verbindungen gemäß Formel (I) besitzen unabhangig von der Art der Gruppe X eine hohe flammschützende Wirkung. Wegen der besseren Zugänglichkeit werden die Verbindungen, in denen X für Sauerstoff steht bevorzugt.

Besonders bevorzugt werden die Salze der 2- und der 4-Formyl-benzolsulfonsäure sowie deren Acetalderivate, insbesondere jedoch die Salze der 2-Formylbenzolsulfonsäure und der 4-Formylbenzolsulfonsäure.

Die erfindungsgemäßen Polycarbonatformmassen können auf üblichen Verarbeitungsmaschinen nach bekannten Methoden zu beliebigen Formkörpern, auch zu Folien, verarbeitet werden.

Die erfindungsgemäßen flammwidrigen Polycarbonat formmassen eignen sich zur Herstellung von Spritzguß- oder Extrusionsartikeln, an die erhöhte Anforderungen bezüglich Flammwidrigkeit gestellt werden, z.B. im Elektro-, Bau-, Fahrzeug- oder Flugzeugbereich.

Beispiele

<u>Beispiel 1 bis 13:</u>

99,9 Teile eines mit Entformungshilfe ausgerüsteten aromatischen Polycarbonats aus 2,2-Bis-(4-hydroxyphenyl) propan (Schmelzindex 7 bis 10 (300°C); Makrolon 2805, Handelsprodukt der Bayer AG) wurden unter Zusatz von 0,1 Teilen nachfolgender Zusätze bei 300° C compoundiert und das erhaltene Granulat zu Prüfstäben mit den Abmessungen 127 x 12,7 x 3,2 mm verspritzt. Die Prüfstäbe wurden dann einer Brennbarkeitsprüfung gemäß der Vorschrift UL 94 (Brennbarkeit fester Kunststoffproben, Underwriters Laboratories) unterworfen und den Brennbarkeitsklassen VO bis V2 bzw. nicht bestanden (V n.b.) zugeordnet. Zusätzlich wurden die mittleren Nachbrennzeiten aus jeweils 5 Beflammungsversuchen in Sekunden bestimmt. Die Farbe der Prüfstäbe wurde visuell beurteilt und mit Farbzahlen von 1 bis 5 benotet:

1: farblos,
2: sehr geringer Gelbstich,
3: geringer Gelbstich,
4: deutlicher Gelbstich,
5: starke Verfärbung.

Die Tabelle zeigt die Ergebnisse der Prüfungen mit verschiedenen erfindungsgemäßen Zusätzen im Vergleich zu nicht flammgeschütztem Material.

| Nr. | Zusatz (0,1 Gew.-%) | UL 94 Klasse | Brenn-zeit [sec] | Farbe |
|---|---|---|---|---|
| 1 | Vergleich ohne Zusatz | V n.b. | 33 | 1 |
| 2 | 2-Formyl-benzolsulfon-säure-Natrium | VO | 6,8 | 1-2 |
| 3 | 2-Formyl-benzolsulfon-säure-ethylenacetal-Natrium | VO | 4,8 | 3 |
| 4 | 5-Formyl-2-methyl-ben-zolsulfonsäure-Natrium | VO | 5,8 | 2 |
| 5 | 5-Formyl-2-methoxy-ben-zolsulfonsäure-Natrium | V1 | 8,2 | 1 |
| 6 | 2-Formyl-benzol-1,5-disulfonsäure-di-Natrium | V2 | 14,2 | 2 |
| 7 | 2-Formyl-benzolsulfon-säure-2,2-dimethyl-propyl-1,3-en-acetal-Natrium | VO | 5,8 | 2 |
| 8 | 2-Formyl-benzolsulfon-säure-cyclohexyl-1,2-en-acetal-Natrium | VO | 4,8 | 2 |
| 9 | 4-Formyl-benzolsulfon-säure-Natrium | VO | 6,0 | 1-2 |
| 10 | Biphenyl-4'-formyl-4-sulfonsäure-Natrium | VO | 7,0 | 1 |
| 11 | 2-Formyl-benzolsulfon-säure-Natrium (technisch, enthält 23 Gew.-% Natrium-sulfat) | VO | 7,0 | 2 |
| 12*) | 2-Formyl-benzolsulfon-säure-Natrium (technisch, enthält 23 Gew.-% Natrium-sulfat) | VO | 6,8 | 1 |
| 13*) | 2-Formyl-benzolsulfon-säure-Natrium (rein) | V1 | 8,0 | 1 |

*) 0,03 Gew.-% Zusatz

Beispiel 14 bis 22:

99,9 Teile eines mit Entformungshilfe ausgerüsteten aromatischen Polycarbonats aus 2,2-Bis-(4-hydroxyphenyl)-propan (Schmelzindex 7 bis 10 (300°C); Makrolon 2805, Handelsprodukt der Bayer AG) wurden unter Zusatz von 0,1 Teilen nachfolgender Zusätze bei 300°C compoundiert und das erhaltene Granulat zu Prüfstäben mit den Abmessungen 127 x 12,7 x 1,6 mm verspritzt. Die Beurteilung erfolgte wie in den Beispielen 1 bis 13. Beispiel 14 bis 17 sind erfindungsgemäß, 18 bis 22 dienen zum Vergleich. Die formylgruppenhaltigen Zusätze zeigen überreschenderweise bei gleicher Dosierung deutlich kürzere Nachbrennzeiten als die chemisch sehr ähnlichen Vergleichsverbindungen ohne die Aldehydfunktion und erreichen die Wirkung eines halogenierten Sulfonats (Beispiel 18).

| Nr. | Zusatz (0,1 Gew.-%) | UL 94 Klasse | Brennzeit [sec] | Farbe |
|---|---|---|---|---|
| 14 | 2-Formyl-benzolsulfonsäure-Natrium | V2 | 7,4 | 1-2 |
| 15 | 5-Formyl-2-methyl-benzolsulfonsäure-Natrium | V2 | 8,4 | 2 |
| 16 | 2-Formyl-benzolsulfonsäure-ethylenacetal-Natrium | V2 | 9,6 | 3 |
| 17 | 5-Formyl-2-methoxy-benzolsulfonsäure-Natrium | V2 | 9,8 | 1 |
| 18 | Perfluorbutansulfonsäure-Kalium | V2 | 9,2 | 1 |
| 19 | 4-Acetylbenzolsulfonsäure-Natrium | V2 | 10,2 | 2-3 |
| 20 | 4-Sulfo-benzoesäureethylester-Natrium | V2 | 11,4 | 1 |
| 21 | Xylylendisulfonsäure-di-Natrium | V2 | 12,6 | 4 |
| 22 | 2-Nitrobenzolsulfonsäure-Natrium | V2 | 15,6 | 5 |

## Patentansprüche

**1.** Polycarbonatformmassen mit einem Gehalt an halogenfreien Sulfonsäuresalzen aromatischer Aldehyde oder an Acetalen dieser Aldehyde in Mengen von 0,005 Gew.-% bis 10 Gew.-%, bezogen auf Gesamtgewicht aus Polycarbonat und halogenfreiem Sulfonsäuresalz.

**2.** Polycarbonatformmassen mit einem Gehalt von 0,01 Gew.-% bis 5 Gew.-% an halogenfreiem Sulfonsäuresalz.

**3.** Polycarbonatformmassen gemäß Anspruch 1, dadurch gekennzeichnet, daß die Sulfonsäuresalze der Formel (I)

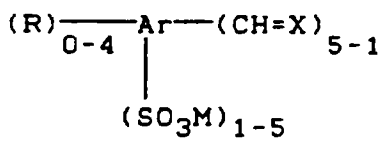

(I)

entsprechen,
worin

Ar ein aromatischer Rest mit ein bis 4 aromatischen Ringen ist,

M für ein Metall der Gruppen 1a, 1b, 2a oder 2b des Periodischen Systems der Elemente steht,

R Wasserstoff, ein halogenfreies $C_1$-$C_6$-Alkyl, ein halogenfreies $C_6$-$C_{10}$-Aryl, ein halogenfreies $C_1$-$C_6$-Alkoxy, eine halogenfreie Acylamino- oder eine halogenfreie Acylimino-Gruppe ist und

X für Sauerstoff oder eine halogenfreie polyvalente Gruppe der Struktur $R'(-O-)_{2-6}$ oder für zwei halogenfreie monovalente R'-O-Reste steht,

wobei R' ein gegebenenfalls verzweigter, halogenfreier 1-6 wertiger Rest eines aliphatischen $C_2$-$C_{20}$- aromatischen $C_6$-$C_{10}$- oder araliphatischen $C_7$-$C_{20}$- Kohlenwasserstoffes ist, der gegegenenfalls mehrere Struktureinheiten (I) verbindet.

**4.** Polycarbonatformmassen gemäß Anspruch 3, dadurch gekennzeichnet, daß M für ein Metall der Gruppen 1a oder

2a steht.

5. Polycarbonatformmassen gemäß Anspruch 3, dadurch gekennzeichnet, daß X Sauerstoff ist.

6. Polycarbonatformmassen gemäß Anspruch 1, dadurch gekennzeichnet, daß das Sulfonsäuresalz aus dem Salz der 2-Formyl-benzolsulfonsäure oder deren Acetalderivaten besteht oder aus dem Salz der 4-Formylbenzolsulfonsäure oder deren Acetalderivaten besteht.

7. Verfahren zur Herstellung der Polycarbonatformmassen der Ansprüche 1 bis 6, dadurch gekennzeichnet, daß man die halogenfreien Sulfonsäuresalze der aromatischen Aldehyde oder der Acetale dieser Aldehyde entweder als solche oder in Form eines Polycarbonatkonzentrats mit dem flammwidrig auszurüstenden Polycarbonatharz in üblicher Weise vermischt und anschließend verarbeitet.

8. Polycarbonatformmassen des Anspruchs 1, dadurch gekennzeichnet, daß sie zusätzlich anorganische Sulfate enthalten.

9. Verfahren zur Herstellung der Polycarbonatformmassen des Anspruchs 8 gemäß Verfahren des Anspruchs 7, dadurch gekennzeichnet, daß man zusätzlich anorganische Sulfate zumischt.

## Claims

1. Polycarbonate moulding compositions containing halogen-free sulphonic acid salts of aromatic aldehydes or acetals of these aldehydes in quantities of 0.005 wt.% to 10 wt.% relative to the total weight of polycarbonate and halogen-free sulphonic acid salt.

2. Polycarbonate moulding compositions containing from 0.01 wt.% to 5 wt.% of halogen-free sulphonic acid salt.

3. Polycarbonate moulding compositions according to claim 1, characterised in that the sulphonic acid salts are of the formula (I)

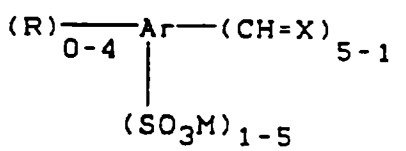

(I)

in which

Ar is an aromatic residue with one to 4 aromatic rings,

M denotes a metal from groups 1a, 1b, 2a or 2b of the periodic system of elements,

R is hydrogen, a halogen-free $C_1$-$C_6$ alkyl, a halogen-free $C_6$-$C_{10}$ aryl, a halogen-free $C_1$-$C_6$ alkoxy, a halogen-free acylamino or halogen-free acylimino group and

X denotes oxygen or a halogen-free polyvalent group of the structure $R'(-O-)_{2-6}$ or two halogen-free, monovalent R'-O residues,

wherein R' is an optionally branched, halogen-free, mono- to hexavalent residue of an aliphatic $C_2$-$C_{20}$, aromatic $C_6$-$C_{10}$ or araliphatic $C_7$-$C_{20}$ hydrocarbon, which residue optionally links two or more structural units (I).

4. Polycarbonate moulding compositions according to claim 3, characterised in that M denotes a metal from groups 1a or 2a.

5. Polycarbonate moulding compositions according to claim 3, characterised in that X is oxygen.

6. Polycarbonate moulding compositions according to claim 1, characterised in that the sulphonic acid salt consists of the salt of 2-formylbenzenesulphonic acid or the acetaldehyde derivatives thereof or of the salt of 4-formylbenzenesulphonic acid or the acetal derivatives thereof.

**7.** Process for the production of the polycarbonate moulding compositions of claims 1 to 6, characterised in that the halogen-free sulphonic acid salts of the aromatic aldehydes or of the acetals of these aldehydes are mixed in a conventional manner with the polycarbonate resin to be rendered flame retardant either as such or in the form of a polycarbonate masterbatch and then processed.

**8.** Polycarbonate moulding compositions of claim 1, characterised in that they additionally contain inorganic sulphates.

**9.** Process for the production of polycarbonate moulding compositions of claim 8 according to the process of claim 7, characterised in that inorganic sulphates are additionally incorporated.

**Revendications**

**1.** Masses ou matériaux de moulage en polycarbonate avec une teneur en sels de l'acide sulfonique d'aldéhydes aroma-tiques exempts d'halogènes ou d'acétals de ces aldéhydes en quantité comprise entre 0,005% en poids et 10% en poids, rapportée au poids total du polycarbonate et du sel de l'acide sulfonique exempt d'halogènes.

**2.** Masse de moulage en polycarbonate ayant une teneur de 0,01% à 54% en poids en sels de l'acide sulfonique exempt d'halogènes.

**3.** Masses de moulage en polycarbonate selon la revendication 1, caractérisées en ce que les sels de l'acide sulfonique correspondent à la formule (I)

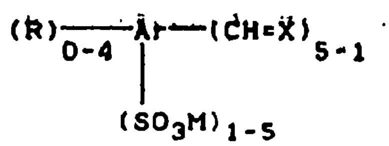

(I)

dans laquelle

Ar représente un radical aromatique ayant de 1 à 4 cycles aromatiques,

M représente un métal des groupes 1a, 1b, 2a et 2b du système périodique des éléments,

R représente un atome d'hydrogène, un radical alkyle en $C_1$-$C_6$ exempt d'halogènes, un radical aryle en $C_6$-$C_{10}$ exempt d'halogènes, un radical alcoxy en $C_1$-$C_6$ exempt d'halogènes, un radical acylamino ou acylimino exempt d'halogène , et

X représente un atome d'oxygène ou un groupe polyvalent exempt d'halogènes ayant pour structure $R'(-O-)_{2-6}$ ou deux radicaux monovalents R'-O- exempts d'halogènes,

où R' représente un radical de valence 1 à 6 exempt d'halogènes éventuellement ramifié d'un hydrocarbure aliphatique en $C_2$-$C_{20}$, aromatique en $C_6$-$C_{10}$, araliphatique en $C_7$-$C_{20}$, qui réunit éventuellement plusieurs unités structurales (I).

**4.** Masses de moulage en polycarbonate selon la revendication 3, caractérisées en ce que M représente un métal des groupes 1a ou 2a.

**5.** Masses de moulage en polycarbonate selon la revendication 3, caractérisées en ce que X représente un atome d'oxygène.

**6.** Masses de moulage en polycarbonate selon la revendication 1, caractérisées en ce que le sel de l'acide sulfonique est un sel de l'acide 2-formyl-benzènesulfonique ou de ses dérivés acétaliques ou un sel de l'acide 4-formyl-benzène-sulfonique ou de ses dérivés acétaliques.

**7.** Procédé de production de masses de moulage en polycarbonate selon les revendications 1 à 6, caractérisé en ce

que l'on mélange de manière habituelle les sels de l'acide sulfonique exempts d'halogènes des aldéhydes aromatiques ou des acétals de ces aldéhydes, soit tels quels, soit sous forme d'un concentré de polycarbonate avec la résine de polycarbonate a rendre ignifuge et qu'on le met en oeuvre ultérieurement.

**8.** Masses de moulage en polycarbonate selon la revendication 1, caractérisée en ce qu'elles contiennent en outre des sulfates inorganiques.

**9.** Procédé de préparation de masses de moulage en polycarbonate selon la revendication 8 par le procédé de la revendication 7, caractérisé en ce qu'on y mélange en outre des sulfates inorganiques.